Europäisches Patentamt

European Patent Office

Office européen des brevets

(11) Numéro de publication: **0 420 711 A1**

## (12) DEMANDE DE BREVET EUROPEEN

(21) Numéro de dépôt: 90402438.7

(51) Int. Cl.5: **H04L 12/42**

(22) Date de dépôt: 05.09.90

(30) Priorité: 28.09.89 FR 8912701

(43) Date de publication de la demande:
03.04.91 Bulletin 91/14

(84) Etats contractants désignés:
AT BE CH DE DK ES GB GR IT LI LU NL SE

(71) Demandeur: EFISYSTEME
21-43, rue de la Grande Charrière, La Boisse
F-01120 Montluel (Ain)(FR)

(72) Inventeur: **Bruno, Jacqueline**
**149 boulevard de la Reine**
**Versailles (Yvelines)(FR)**
Inventeur: **Mathvet, Patrick**
**Rue de l'Eglise**
**Villieu (Ain)(FR)**

(74) Mandataire: **Cabinet Pierre HERRBURGER**
**115, Boulevard Haussmann**
**F-75008 Paris(FR)**

(54) Coupleur autocicatrisant pour réseaux de transmission d'informations.

(57)
a) Coupleur autocicatrisant pour réseaux de transmission d'informations ;
b) caractérisé en ce qu'il comporte une porte (OU3) pour transmettre à l'interface de sortie (ISS1) et au support principal (SP) un signal d'information SI ou un signal de test et de laisser passer les informations de ISS2 lorsque les informations circulent sur le support secondaire, ainsi qu'un pilote d'interface (PISS2) homologue à la troisième porte (OU3) et pilotant l'interface de sortie (ISS2) vers le support secondaire (SS) pour transmettre à ce support secondaire soit le signal d'information (VALDCF) reçu du support principal (SP) par l'interface d'entrée (ISE1) correspondante, soit le signal de test (TEST).

FIG.1

# COUPLEUR AUTOCICATRISANT POUR RÉSEAUX DE TRANSMISSION D'INFORMATIONS

La présente invention concerne un coupleur pour réseau de transmission d'informations, réseau dont au moins une partie a une structure en anneau ou susceptible de se ramener à une structure en anneau avec un support principal SP et un support auxiliaire SS, coupleur pouvant assurer le branchement d'une station sur le réseau par l'intermédiaire d'une interface pour fournir à cette station des informations du réseau et/ou injecter dans le réseau des informations en provenance de cette station, coupleur comportant :

- deux entrées (ISE1, ISE2) et deux sorties (ISS1, ISS2),
- un moyen de connexion (L1...L5, M1-M3, OU1, OU2) des entrées et des sorties pour relier au moins une entrée et au moins une sortie entre elles et à l'interface de station (INT),
- un moyen de détection et de commande (DRS1, DRS2) dont la partie de détection est reliée aux entrées (ISE1, ISE2) pour détecter la présence de signaux sur l'une et/ou l'autre entrée et la partie de commande est reliée au moyen de connexion pour qu'en fonctionnement normal, en présence de signaux sur la première entrée (ISE1), celle-ci soit reliée à la pre mière sortie (ISS1), et qu'en l'absence de signaux sur la première entrée traduisant un fonctionnement anormal du réseau, cette première sortie (ISS1) soit reliée à la seconde entrée (ISE2), le moyen de détection de commande (DRS1, DRS2) reliant la deuxième entrée (ISE2) à la première sortie (ISS1) en cas de détection d'une absence anormale de signaux sur la première entrée (ISE1) et bloquant en même temps l'émission de signaux par sa première sortie (ISS1), le moyen de connexion étant constitué par :

- une première porte OU (OU1) à deux entrées dont la première entrée est reliée à la première entrée (ISE1),
- une seconde porte OU (ou2) à deux entrées dont la première entrée est reliée à la seconde entrée (ISE2),
- un interface de station (INT) dont l'entrée est reliée à la première porte (OU1) et dont la sortie est reliée à la première sortie (ISS1), l'entrée de l'interface de station (INT) étant également liée à la première entrée (ISE1) par la première porte (OU1) et à la seconde entrée (ISE2) par la seconde porte (OU2) elle-même reliée à la fois à la seconde sortie (ISS2) et à la seconde entrée de la première porte (OU1), la sortie de l'interface de station (INT) étant reliée à la première interface de sortie (ISS1) et à la seconde porte (OU2), le moyen de détection et de commande comportant :
- un premier détecteur (DRS1) dont l'entrée est reliée à la première interface d'entrée (ISE1),

- un second détecteur (DRS2) dont l'entrée est reliée à la seconde interface d'entrée (ISE2).

Un tel coupleur autocicatrisant est déjà connu selon FR-A-87 09 144 du 29.6.1987.

Un tel coupleur est intéressant, car il présente une caractéristique d'autocicatrisation , ce qui signifie que lorsqu'il y a une rupture du support principal ou du support secondaire, entre deux coupleurs, l'anneau de transmission des informations se rebouclent automatiquement et peut continuer à fonctionner. Toutefois, ce coupleur connu ne peut changer automatiquement d'état lorsque la réparation du support principal SE ou du support secondaire est effectuée. Il faut alors une intervention dans le circuit.

La présente invention se propose de remédier à cet inconvénient et de créer un coupleur autocicatrisant qui lorsque le support a été réparé puisse revenir automatiquement à l'état normal et se décicatriser.

A cet effet, l'invention concerne un coupleur du type ci-dessus caractérisé en ce qu'il comporte en outre une porte OU qui permet de transmettre à l'interface de sortie correspondante et au support principal soit un signal d'information soit un signal de test généré par un générateur de signal de test GENE associé à chaque coupleur, soit encore le signal d'information circulant sur le support secondaire, ainsi qu'un pilote d'interface (PISS2) homologue à la troisième porte (OU3) et pilotant l'interface de sortie (ISS2) vers le support secondaire (SS) pour transmettre à ce support secondaire soit le signal d'information (VALDCF) reçu du support principal (SP) par l'interface d'entrée (ISE1) correspondante, soit le signal de test (TEST) suivant que le support principal (et/ou secondaire) (SP, SS) a ou non été rompu au niveau du présent coupleur, ainsi qu'un module de régénération du signal en aval de l'interface d'entrée et un module de régénération du signal en aval de l'interface d'entrée du support secondaire, pour transmettre et réencoder les signaux d'informations, mais arrêter les signaux de test, les détecteurs (DRS1 et DRS2) respectivement associés étant en amont de chacun des deux modules de régénération, alors qu'un autre détecteur respectif est en aval de chaque module de régénération ainsi qu'un générateur de signaux de test.

Le coupleur autocicatrisant selon l'invention offre non seulement l'avantage important de se décicatriser automatiquement après l'intervention de réparation, mais également de permettre une décicatrisation commandée lorsque le circuit l'exige.

Le coupleur selon l'invention qui reçoit des signaux pour les régénérer ou les coder de nouveau avant leur transmission permet d'augmenter les caractéristiques d'un anneau de transmission d'informations et le nombre de coupleurs et par suite de stations qui peuvent être branchées sur un tel anneau. Le module de réencondage filtre en outre les signaux pour supprimer les signaux de test et de transmettre que les signaux d'informations.

Comme les coupleurs selon l'invention ont une électronique relativement compliquée, les signaux peuvent être ainsi non simplement régénérés, mais réencodés, de sorte que le taux de déformation des signaux dans l'ensemble de l'anneau soit pratiquement constant.

Le signal de test qui est arrêté après son entrée dans un coupleur par le module de régénération est ainsi émis à nouveau par chaque coupleur. Chaque coupleur est protégé individuellement par l'émission de signaux de test. Une réalisation possible de signal de test consiste en une suite d'impulsions. Cela permet une grande souplesse du choix des interfaces qui n'ont pas besoin d'avoir d'état de repos en l'absence d'informations pour distinguer la rupture du support, puisque cette distinction se fait par la présence du signal de test. Cela se traduit par une diminution de la consommation, une réduction de la bande passante et une augmentation de la durée de vie des composants.

L'invention sera décrite de manière détaillée à l'aide des dessins, dans lesquels :
- la figure 1 est un schéma d'un coupleur selon l'invention ;
- la figure 2 montre un anneau formé de coupleurs en fonctionnement normal ;
- la figure 3 montre l'anneau de la figure 2 en cas de rupture du support principal ;
- la figure 4 montre l'anneau de la figure 2 en cas de rupture du support secondaire.

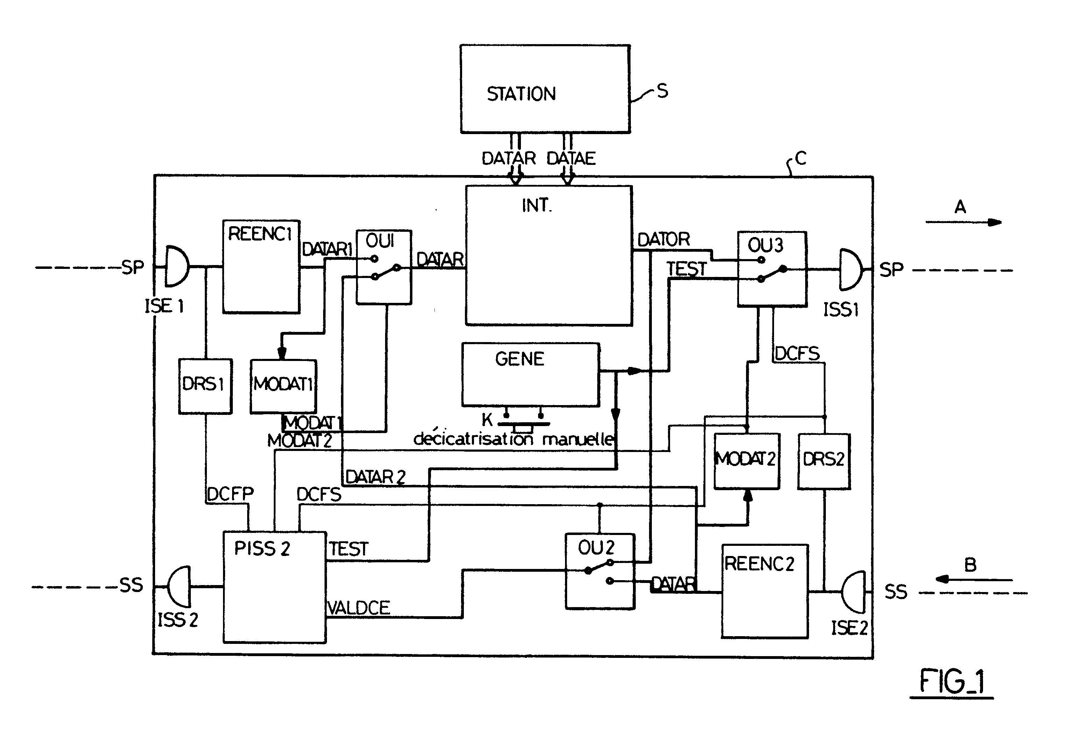

La figure 1 montre le coupleur autocicatrisant C selon l'invention qui est relié à un support principal SP (sens de circulation des informations selon la flèche A), formant un anneau ou un réseau susceptible d'être transformé au moins partiellement en un anneau. Ce coupleur C est relié à un support secondaire SS dans lequel circule normalement un signal de test dans le sens de la flèche B, mais qui peut servir au passage des informations en cas de rupture du support principal SP et d'autocicatrisation.

Le coupleur C est également relié à une station S par un bus de données aller/retour (DATAR, DATA E). Toutefois, cette liaison n'est pas nécessaire, car le coupleur peut être utilisé simplement comme rejeteur.

Le coupleur C se compose d'une entrée et d'une sortie pour le support principal SP et d'une entrée et d'une sortie pour le support secondaire SS, ainsi que des moyens pour relier ces entrées et sor ties suivant l'état du réseau. Ces moyens se composent des interfaces d'entrée ISE1, ISE2 associées respectivement à l'entrée du réseau SP et à celle du réseau SS, ainsi qu'une interface de sortie ISS1 et ISS2 pour le support principal SP et le support secondaire SS.

La liaison entre les interfaces et la station S est assurée par les différents circuits du coupleur C.

Le coupleur C comporte un détecteur de rupture de support DRS1, DRS2 associé respectivement aux interfaces d'entrée ISE1, ISE2. Ces détecteurs détectent l'activité du support principal SP et du support secondaire SS. En aval des interfaces ISE1, ISE2, il est prévu un module de régénération du signal REENC1, REENC2 qui reçoit le signal d'information transmis par le support principal SP ou en cas de rupture et d'autocicatrisation, celui transmis par le support secondaire SS pour restaurer ce signal par un régénération. Cette régénération ne concerne que les signaux d'information et de données et non pas les signaux de test. Ce module de régénération fonctionne ainsi comme un filtre vis-à-vis du signal de test.

En sortie, chaque module de régénération REENC1, REENC2 est relié à un détecteur de rupture MODAT1, MODAT2 identique au détecteur DRS1, DRS2 et qui détecte l'activité en sortie des modules de régénération.

En aval de chacun des modules RENC1, 2, il est prévu une porte OU1, OU2 à deux entrées, pour assurer la liaison avec l'interface de sortie respective ISS1, ISS2 par l'intermédiaire des moyens décrits ci-après :
- la porte OU1 est reliée à la sortie du module REENC1 portant la référence DATAR1 sur l'une de ces entrées et, DATAR2 sur l'autre entrée.
- la sortie de la porte OU1 porte la référence DATAR. La porte OU1 est en outre commandée par le détecteur MODAT1 en fonction de l'activité en sortie du module de réencondage REENC1.

De façon symétrique, la porte OU2 qui est reliée à la sortie DATAR2 du module de régénération REENC2 sur l'une de ces entrées, a son autre entrée branché de manière à recevoir le signal DATAR1.

Cette porte OU2 est commandée par le module de détection DRS2 qui détecte l'activité en aval de l'interface d'entrée ISE2.

Le coupleur C comporte un interface de station INT qui assure la liaison avec la station S. L'entrée de cet interface de station INT est reliée à la sortie DATAR de la porte OU1 et la sortie DATSOR de l'interface de station est reliée à la seconde entrée de la porte OU2.

Le coupleur comporte également une troisième porte OU3 en amont de la sortie ISS1 reliée au support principal SP. Cette porte OU3 à deux entrées reçoit sur la première entrée la ligne DATSOR de sortie de l'interface de station et sur sa seconde entrée un signal de test. Le signal de test est généré par un générateur de signal de test GENE qui émet automatiquement un signal de test et comporte en outre une commande K de décicatrisation manuelle qui sera décrite ultérieurement. De manière générale, toutefois le signal de test peut correspondre à une présence effective de signal comme dans le cas ci-dessus, mais aussi à une absence de signal dans le cas où l'on utilise une porteuse.

Enfin et de manière sensiblement symétrique avec la porte OU3, le coupleur C comporte un pilote d'interface PISS2 qui pilote l'interface ISS2. Ce pilote PISS2 est d'une part relié au détecteur TRS1 dont il reçoit le signal d'information de commande DCFP, au détecteur DRS2 dont il reçoit le signal d'information de commande DCFS et enfin au détecteur MODAT2 dont il reçoit le signal d'information et de commande MODAT.

Ce pilote fonctionne à la manière d'une porte OU et reçoit à cet effet sur l'une de ces entrées le signal de sortie VAL DCF de la porte OU2 et sur l'autre entrée le signal de test TEST pour transmettre l'un ou l'autre de ces signaux à l'interface de sortie ISS2. Il offre en outre la possibilité de laisser passer les informations de ISS2, lorsque les informations circulent sur le support secondaire. En outre, la porte OU3 et le pilote d'interface PISS2 qui fonctionne également comme une porte OU peuvent être gérées de manière dynamique en laissant passer des signaux de test entre les signaux d'information. Cela permet une réaction en temps réel aux coupures et une amélioration de la bande passante.

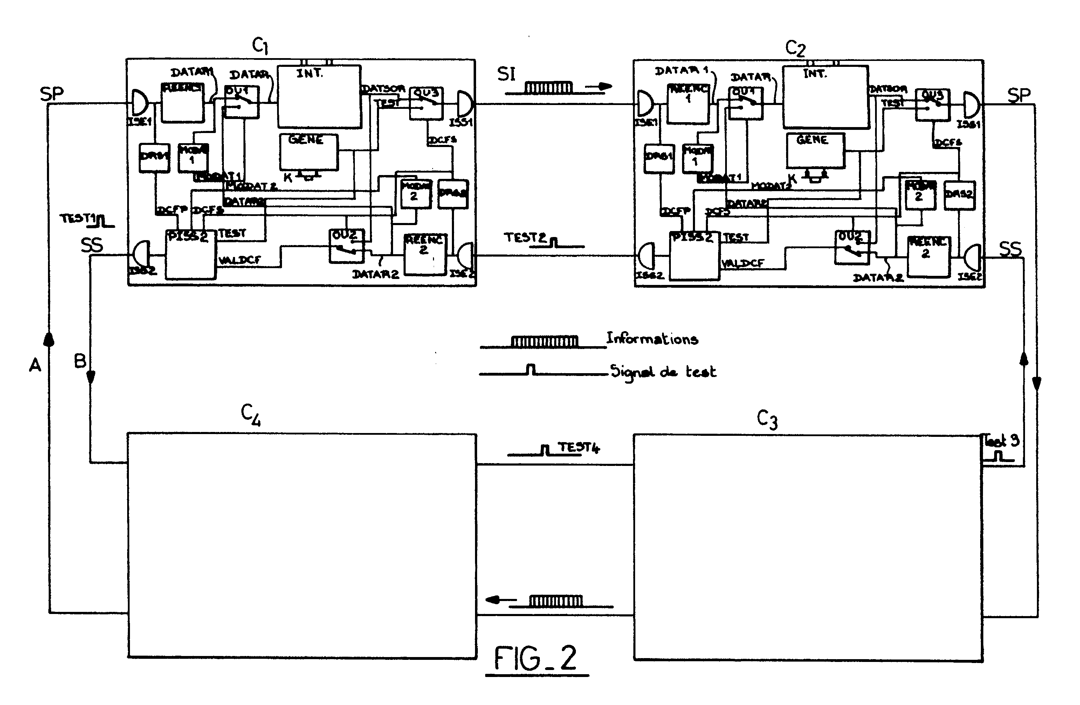

Le fonctionnement du coupleur autocicatrisant C ci-dessus sera explicité ci-après à l'aide des figures 2, 3, et 4.

Ces différentes figures montrent un réseau de transmission formé de quatre coupleurs C1, C2, C3, C4 identique à celui décrit ci-dessus.

Dans ces différentes figures, les éléments homologues, identiques, des différents coupleurs portent les mêmes références et ne sont pas distingués par une référence particulière pour ne pas compliquer leur écriture.

D'ailleurs, ces éléments de détail des coupleurs ne sont représentés que dans les deux coupleurs C1, C2 qui serviront plus particulièrement à la description de la fonction d'autocicatrisation et de décicatrisation, les autres coupleurs C3, C4 n'étant représentés que pour compléter l'anneau sans que les organes internes de ces coupleurs ne soient concernés, puisque la coupure est supposée se produire entre les coupleurs C1 et C2.

Fonctionnement normal (figure 2) :

Les coupleurs C1...C4 sont reliés par le support principal SP et le support secondaire SS. Le support principal transmet le signal d'information SI entre les différentes interfaces homologues ISS1, ISE1, alors que le signal de test émis par chaque coupleur arrive dans le coupleur suivant où il est arrêté et ce coupleur suivant transmet à sa sortie un autre signal de test.

En fonctionnement normal, les informations identiques circulent sur le support principal SP et dans chaque coupleur elles passent de la ligne DATAR1 à la ligne DATAR à travers la porte OU1, puis à travers l'interface de station INT, en étant éventuellement transmises ou fournies par la station S, puis en sortie de l'interface de station les données passent par DATSOR à travers la porte OU3 et l'interface de sortie ISS1 de chaque coupleur.

Pour ce fonctionnement les portes OU1 et OU3 occupent la position représentée qui assure la transmission des données décrite ci-dessus.

En même temps, le signal de test de chaque coupleur (portant les références TEST1, TEST2, TEST3, TEST4) est transmis au coupleur suivant dans le sens opposé du sens de circulation des informations (flèche B pour les signaux de test et flèche A pour le sens de circulation des informations). Le signal de test est arrêté par le coupleur qui le reçoit et est remplacé en sortie de ce même coupleur par les signaux de test générés par le générateur GENE de ce coupleur. La porte OU2 occupe ainsi la position représentée à la figure 2.

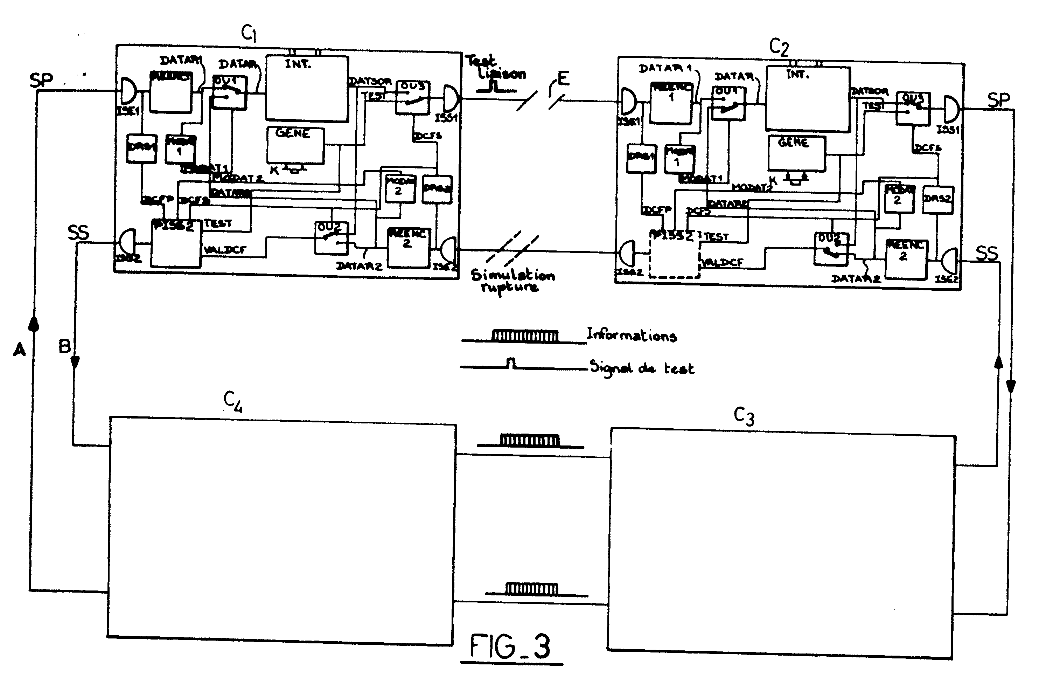

Rupture du support principal (figure 3) :

Dans le cas présent, on suppose que le conducteur principal SP a été rompu entre les coupleurs C1 et C à l'endroit E. L'anneau de transmission d'information effectue alors tout d'abord une autocicatrisation de façon à permettre la circulation des informations malgré la coupure du support principal SP en E, puis lorsque la coupure est réparée, l'installation effectue automatiquement ou le cas échéant manuellement une décicatrisation pour revenir au fonctionnement normal comme celui de la figure 2.

En cas de rupture en E, le détecteur DRS1 du coupleur C2 détecte l'absence de signal en sortie de l'interface ISE1. Il commande alors l'inhibition de l'envoi du signal de test par l'interface ISS2 en transmettant l'instruction correspondante au pilote d'interface PISS2. En même temps comme en sortie du module de réencodage RENC1, le détecteur MODAT1 ne détecte aucun signal, il commute la porte OU1 pour relier le support secondaire au support principal, le chemin se faisant de DATAR2 vers DATAR, vers DATARSOR, et vers l'interface ISS1 (support SP).

En même temps le détecteur de rupture DRS2 du coupleur C1 détecte une absence de signal et il commute la porte OU3 pour transmettre le signal de test de son générateur GENE vers l'interface ISS1, en direction de la rupture E.

En même temps, ce coupleur fait commuter la porte OU2 pour relier le support secondaire SP au support principal et transmettre les informations en sortie de l'interface de station INT par DATSOR vers VALDCF et l'interface ISS2.

Le circuit est ainsi cicatrisé par la liaison entre la boucle du support principal et celle du support secondaire. Les autres coupleurs laissent alors passer les informations sur le support secondaire grâce à la commande assurée par PISS2 de chacun de ces coupleurs.

Lorsque la rupture E est réparée, l'installation peut revenir en fonctionnement normal, car le module DRS1 du coupleur C2 détecte le signal de test émis par l'interface ISS1 du coupleur C1. Le signal correspondant est transmis au pilote PISS2 pour rétablir la liaison entre ISE2 et ISS2 qui retransmet le signal de test. En même temps comme le module de régénération RENC1 reçoit un signal d'information, ce qui est détecté par le détecteur MODAT1, celui-ci commute la porte OU1 pour transmettre les informations de DATAR1 vers DATAR, et de là à travers l'interface de station vers DATSOR. En même temps, la porte OU3 a basculé, si bien que les informations peuvent arriver à l'interface ISS1 et dans le support principal SP.

Pendant ce temps, le coupleur C1 reçoit le signal de test dans les conditions normales et se décicatrise de la même manière.

Dans le cas traité ci-dessus, il n'y a qu'une rupture dans le support principal entre les coupleurs C1 et C2, et la rupture du support secondaire SS entre les mêmes coupleurs est simulé.

En fait, le support secondaire est en général rompu en même temps que le support principal.

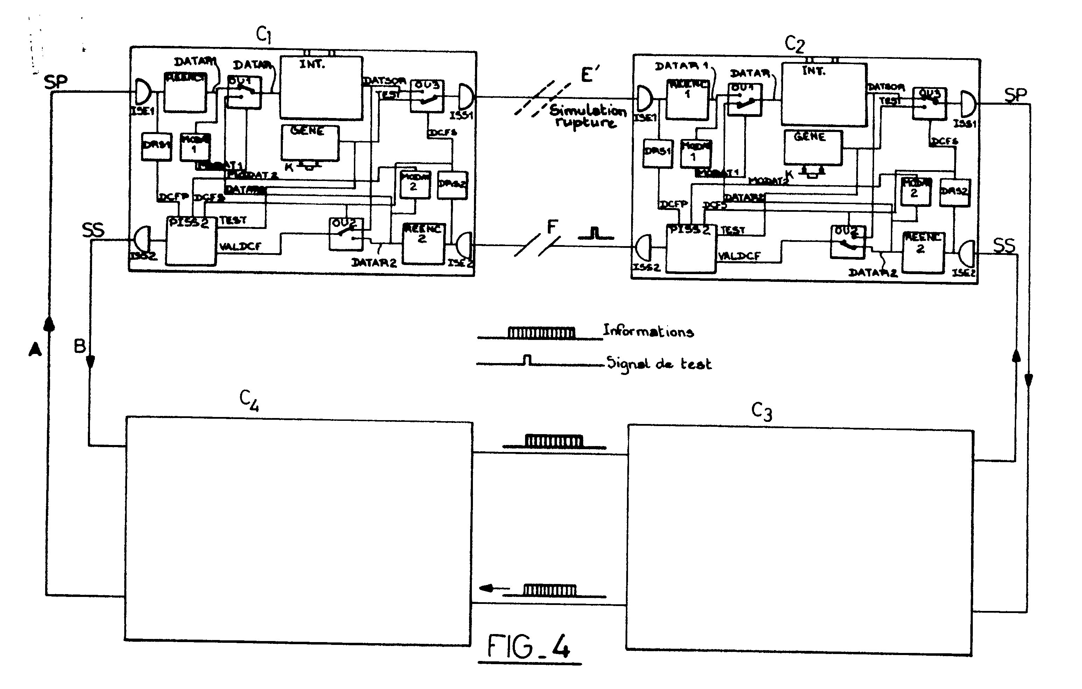

Rupture du support secondaire (figure 4) :

Lorsque le support secondaire est rompu au point S comme indiqué dans cette figure, les coupleurs C1 et C2 simulent la rupture du support principal en E' et l'on repasse à la situation décrite ci-dessus.

Comme indiqué ci-dessus, à propos de la figure 1, le générateur du signal de test GENE comporte une commande K de décicatrisation manuelle. En effet, dans certaines applications, il est souhaitable que les coupleurs ne puissent se décicatriser automatiquement. Cela est normalement le cas lorsque la cicatrisation peut intervenir uniquement en cas de rupture franche du support et nécessite une intervention de maintenance. A ce moment le générateur ne transmet pas automatiquement de signal de test. Pour transmettre le signal de test, il faut actionner la commande K. Lorsqu'après la réparation le générateur est ainsi actionné, il commence à transmettre le signal de test et la décicatrisation se déroule alors comme indiqué ci-dessus.

**Revendications**

Coupleur pour réseau de transmission d'informations, réseau dont au moins une partie a une structure en anneau ou susceptible de se ramener à une structure en anneau avec un support principal SP et un support auxiliaire SS, coupleur pouvant assurer le branchement d'une station sur le réseau par l'intermédiaire d'une interface pour fournir à cette station des informations du réseau et/ou injecter dans le réseau des informations en provenance de cette station, coupleur comportant :
- deux entrées (ISE1, ISE2) et deux sorties (ISS1, ISS2),
- un moyen de connexion (L1...L5, M1-M3, OU1, OU2) des entrées et des sorties pour relier au moins une entrée et au moins une sortie entre elles et à l'interface de station (INT),
- un moyen de détection et de commande (DRS1, DRS2) dont la partie de détection est reliée aux entrées (ISE1, ISE2) pour détecter la présence de signaux sur l'une et/ou l'autre entrée et la partie de commande est reliée au moyen de connexion pour qu'en fonctionnement normal, en présence de signaux sur la première entrée (ISE1), celle-ci soit reliée à la première sortie (ISS1), et qu'en l'absence de signaux sur la première entrée traduisant un fonctionnement anormal du réseau, cette première sortie (ISS1) soit reliée à la seconde entrée (ISE2), le moyen de détection de commande (DRS1, DRS2) reliant la deuxième entrée (ISE2) à la première sortie (ISS1) en cas de détection d'une absence anormale de signaux sur la première entrée (ISE1) et bloquant en même temps l'émission de signaux par sa première sortie (ISS1), le moyen de connexion étant constitué par :
- une première porte OU (OU1) à deux entrées dont la première entrée est reliée à la première entrée (ISE1),
- une seconde porte OU (ou2) à deux entrées dont la première entrée est reliée à la seconde entrée (ISE2),
- un interface de station (INT) dont l'entrée est reliée à la première porte (OU1) et dont la sortie est reliée à la première sortie (ISS1), l'entrée de l'interface de station (INT) étant également liée à la première entrée (ISE1) par la première porte (OU1) et à la seconde entrée (ISE2) par la seconde porte (OU2) elle-même reliée à la fois à la seconde sortie (ISS2) et à la seconde entrée de la première porte (OU1), la sortie de l'interface de station (INT) étant reliée à la première interface de sortie (ISS1) et à la seconde pore (OU2), le moyen de détection et de commande comportant :

- un premier détecteur (DRS1) dont l'entrée est reliée à la première interface d'entrée (ISE1),
- un second détecteur (DRS2) dont l'entrée est reliée à la seconde interface d'entrée (ISE2),

coupleur caractérisé en ce qu'il comporte en outre une porte OU (OU3) qui permet de transmettre à l'interface de sortie (ISS1) correspondante et au support principal (SP) soit un signal d'information SI (DATSOR) soit un signal de test généré par un générateur de signal de test GENE associé à chaque coupleur, et de laisser passer les informations de ISS2 lorsque les informations circulent sur le support secondaire, ainsi qu'un pilote d'interface (PISS2) homologue à la troisième porte (OU3) et pilotant l'interface de sortie (ISS2) vers le support secondaire (SS) pour transmettre à ce support secondaire soit le signal d'information (VALDCF) reçu du support principal (SP) par l'interface d'entrée (ISE1) correspondante, soit le signal de test (TEST) suivant que le support principal (et/ou secondaire) (SP, SS) a ou non été rompu au niveau du présent coupleur, ainsi qu'un module de régénération du signal en aval de l'interface d'entrée (ISE1) et un module de régénération du signal (REENC2) en aval de l'interface d'entrée (ISE) du support secondaire (SS), pour transmettre et réencoder les signaux d'informations, mais arrêter les signaux de test, les détecteurs (DRS1 et DRS2) respectivement associés étant en amont de chacun des deux modules de régénération, alors qu'un autre détecteur (MODAT1, MODAT2) respectif est en aval de chaque module de régénération (REENC1, REENC2), ainsi qu'un générateur de signaux de test (GENE).

FIG.1

STATION S

DATAR DATAE

C

A →

INT.

REENC1 DATAR1 OUI DATAR DATOR OU3

SP ISE 1 TEST SP ISS1

DCFS

DRS1 MODAT1 GENE

MODAT1 K MODAT2 DRS2
MODAT2 décicatrisation manuelle

DATAR 2

DCFP DCFS

PISS 2 TEST OU2 REENC2

SS ISS 2 B ←

VALDCE DATAR SS ISE 2

EP 0 420 711 A1

FIG_2

Informations

Signal de test

EP 0 420 711 A1

FIG_3

EP 0 420 711 A1

FIG_4

EP 0 420 711 A1

Office européen
des brevets

**RAPPORT DE RECHERCHE
EUROPEENNE**

Numéro de la demande

**EP 90 40 2438**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 617 354   (APPLUSIX)<br>* page 1, ligne 14 - page 9, ligne 5; revendication 1; figure 3 * | 1 | H 04 L 12/42 |
| A | EP-A-0 168 258   (FUJITSU)<br>* abrégé * * page 3, ligne 33 - page 6, ligne 7 @ page 9, ligne 9 - page 12, ligne 35 * | 1 | |
| A | FR-A-2 565 756   (COMPAGNIE GENERALE DE CONSTRUCTIONS TELEPHONIQUES)<br>* abrégé * * page 2, ligne 2 - page 3, ligne 4 * * page 3, ligne 37 - page 5, ligne 7 * | 1 | |

DOMAINES TECHNIQUES
RECHERCHES (Int. Cl.5)

H 04 L

Le présent rapport de recherche a été établi pour toutes les revendications

| Lieu de la recherche | Date d'achèvement de la recherche | Examinateur |
|---|---|---|
| La Haye | 20 décembre 90 | STAESSEN B.F. |